# EUROPÄISCHE PATENTSCHRIFT

(11) **EP 2 648 056 B1**
(45) Veröffentlichungstag und Bekanntmachung des Hinweises auf die Patenterteilung: **10.11.2021**
(21) Anmeldenummer: 13162507.1
(22) Anmeldetag: 05.04.2013
(51) Int. Cl.: G05B 19/042

(54) **Verfahren zum Betreiben eines elektrischen Antriebssystems und Antriebssystem**
Method for operating an electric propulsion system and a propulsion system
Procédé d'entraînement d'un système d'entraînement électrique et système d'entraînement

(30) Priorität: 05.04.2012 DE 102012205708
(43) Veröffentlichungstag der Anmeldung: 09.10.2013
(73) Patentinhaber: Lenze Automation GmbH, 31855 Aerzen (DE)
(72) Erfinder: Hesse, Dr. Peter, 31789 Hameln (DE); Meier, Sven, 31812 Bad Pyrmont (DE); Röttger, Andreas, 32427 Minden (DE); Ehlich, Martin, 32689 Kalletal (DE); Stöwer, Mathias, 30880 Laatzen (DE); Hartmann, Elmar, 31855 Aerzen (DE)
(74) Vertreter: Patentanwälte Ruff, Wilhelm, Beier, Dauster & Partner mbB

(56) Entgegenhaltungen:
- DE-A1-102005 032 075
- DE-U1-202010 010 142
- None

## Beschreibung

Die Erfindung betrifft ein Verfahren zum Betreiben eines elektrischen Antriebssystems und ein elektrisches Antriebssystem.

Antriebssysteme umfassen typisch eine Anzahl von Steuergeräten, beispielsweise Frequenz- und/oder Servoumrichter zur Ansteuerung von Elektromotoren, Verwaltungsgeräte und Bediengeräte. Die Steuergeräte sind in der Regel parametrierbar, d.h. weisen spezifische Betriebsparameter auf, die dazu dienen, das Steuergerät durch geeignete Einstellung der zugehörigen Betriebsparameterwerte beispielsweise an eine spezifische Prozessperipherie anzupassen.

Im Zuge der Inbetriebnahme und beim Service von derartigen Antriebssystemen ergeben sich häufig Probleme bei der Verwaltung von umfangreichen Parameterwertesätzen, insbesondere wenn Parameter temporär zu Inbetriebnahmezwecken bzw. Testzwecken eingestellt werden.

Die DE 10 2005 032 075 A1 zeigt ein Verfahren zur Inbetriebnahme eines elektrischen Antriebssystems, bei dem ein Boot-Speicherbereich in einer Maschinensteuerung vorgesehen ist, wobei dem Boot-Speicherbereich ein Spiegel-Boot-Speicherbereich in einer Maschinensteuerung zugeordnet ist.

Die DE 20 2010 010 142 U1 zeigt ein Parametriergerät für einen Rohrmotor.

Der Erfindung liegt die Aufgabe zugrunde, ein Verfahren zum Betreiben eines elektrischen Antriebssystems und ein elektrisches Antriebssystem zur Verfügung zu stellen, die eine einfache, hochverfügbare und effiziente Handhabung von Betriebsparameterwerten von Steuergeräten eines elektrischen Antriebssystems ermöglichen.

Die Erfindung löst diese Aufgabe durch ein Verfahren nach Anspruch 1 und ein elektrisches Antriebssystem nach Anspruch 5. Bevorzugte Ausführungsformen sind Gegenstand der Unteransprüche, deren Wortlaut hiermit durch Bezugnahme zum Inhalt der Beschreibung gemacht wird.

Das Verfahren dient zum Betreiben eines elektrischen Antriebssystems.

Das elektrische Antriebssystem umfasst: mindestens ein Steuergerät mit einer Anzahl von Betriebsparametern, denen einstellbare Betriebsparameterwerte zugeordnet sind, wobei das Steuergerät in Abhängigkeit von den Betriebsparameterwerten arbeitet bzw. betrieben wird und Betriebsparameterwerkseinstellungswerte nichtflüchtig speichert, beispielsweise als binäre Werte in einem nichtflüchtigen Speicher. Die Betriebsparameterwerkseinstellungswerte können beispielsweise bei der Steuergeräteherstellung in den nichtflüchtigen Speicher programmiert werden. Es kann sich um typgleiche Steuergeräte handeln oder es können Steuergeräte verschiedenen Typs vorhanden sein, beispielsweise Steuergeräte in Form von Frequenzumrichtern, Servoumrichtern, I/O-Systemen, usw.

Weiter umfasst das elektrische Antriebssystem mindestens ein mit dem Steuergerät, beispielsweise über einen herkömmlichen Feldbus, gekoppeltes, übergeordnetes Verwaltungsgerät, beispielsweise in Form eines Industrie-PCs, das bzw. der die anwendungsspezifischen Betriebsparameterwerte für das Steuergerät, beispielsweise in einem Flash-Speicher, speichert.

Das elektrische Antriebssystem umfasst weiter mindestens ein mit dem Verwaltungsgerät, beispielsweise über einen herkömmlichen Kommunikationspfad, gekoppeltes Bediengerät.

Bei einem Hochfahren des elektrischen Antriebssystems, in der Regel nach dem Einschalten einer Energieversorgung des Antriebssystems, werden automatisiert folgende Schritte durchgeführt.

Zunächst werden in dem Steuergerät im Zuge eines Steuergeräte-Bootvorgangs die Betriebsparameterwerte auf die Betriebsparameterwerkseinstellungswerte eingestellt, indem beispielsweise Variablen, die den Betriebsparametern zugeordnet sind, mit den Betriebsparameterwerkseinstellungswerten initialisiert werden. Anschließend werden mittels des Verwaltungsgeräts mindestens solche anwendungsspezifischen Betriebsparameterwerte in das Steuergerät geladen, die von den Betriebsparameterwerkseinstellungswerten abweichen. Es ist selbstverständlich möglich, dass immer ein vollständiger Satz von anwendungsspezifischen Betriebsparameterwerten, d.h. sämtliche zur Verfügung stehenden anwendungsspezifischen Betriebsparameterwerte, in das Steuergerät geladen werden. Im Steuergerät werden entsprechenden Betriebsparameterwerte auf die geladenen anwendungsspezifischen Betriebsparameterwerte eingestellt, d.h. die beim Booten durchgeführte Einstellung wird insoweit überschrieben.

Zur, insbesondere persistenten bzw. dauerhaften, Einstellung von Betriebsparameterwerten werden folgende Schritte durchgeführt.

Mittels des Bediengeräts wird zunächst mindestens ein Betriebsparameterwert in dem Steuergerät eingestellt bzw. verändert, beispielsweise im Zuge einer Wartung oder einer Inbetriebnahme des Antriebssystems. Die derart eingestellten Betriebsparameterwerte weichen in der Regel von entsprechenden Betriebsparameterwerkseinstellungswerten ab.

Wenn die Betriebsparameterwerte wie gewünscht eingestellt sind, d.h. typisch nach einer erfolgreichen Inbetriebnahme, wird mittels des Bediengeräts, beispielsweise getriggert durch einen von einem Benutzer eingegebenen Speicherbefehl, das Verwaltungsgerät derart angesteuert, dass dieses die in dem Steuergerät aktuell eingestellten Betriebsparameterwerte ausliest und als die anwendungsspezifischen Betriebsparameterwerte für das Steuergerät speichert, sodass bei einem nächsten Hochfahren des Antriebssystems die derart gespeicherten Betriebsparameterwerte in das zugehörige Steuergerät geschrieben werden. Die Erfindung ermöglicht somit eine einfache Inbetriebnahme durch gewünschtes Einstellen von Betriebsparameterwerten sämtlicher Steuergeräte, wobei im Anschluss sämtliche anwendungsspezifischen Einstellungen im Verwaltungsgerät gespeichert werden und damit beim folgenden Hochfahren wieder zur Verfügung stehen.

Auf dem Verwaltungsgerät kann zur Interaktion mit dem Bediengerät beispielsweise ein herkömmlicher Web-Server integriert sein. Das Bediengerät kann für diesen Fall ein beliebiges Gerät mit einem Web-Browser sein, wobei für eine (Fern-)Bedienung mittels des Web-Browsers eine Verbindung zu dem Web-Server aufgebaut wird, beispielsweise durch Eingabe einer entsprechenden Netzwerk-IP oder eines Verwaltungsgeräte-Alias. Der Web-Browser zeigt dann entsprechende, durch den Web-Server bereitgestellte Inhalte an und ermöglicht somit beispielsweise eine Einstellung und/oder ein Speichern von Betriebsparameterwerten auf dem Verwaltungsgerät und/oder den Steuergeräten.

Es können mindestens zwei Bediengeräte vorgesehen sein, wobei mittels eines ersten Bediengeräts ein Projektieren des elektrischen Antriebssystems umfassend ein Festlegen der anwendungsspezifischen Betriebsparameterwerte durchgeführt wird und mittels eines zweiten Bediengeräts eine Wartung des elektrischen Antriebssystems umfassend ein Ändern von Betriebsparameterwerten durchgeführt wird. Beim Projektieren des elektrischen Antriebssystems werden in der Regel sämtliche notwendigen Komponenten des elektrischen Antriebssystems, einschließlich der Steuergeräte, aus einer vorgegebenen Menge von Komponenten ausgewählt und geeignet miteinander gekoppelt. Im Zuge des Projektierens können nach einer Auswahl eines Steuergeräts auch dessen Betriebsparameterwerte festgelegt werden. Mittels des Bediengeräts können die gewünschten Betriebsparameterwerte auf das Verwaltungsgerät geladen werden, sodass diese bei einem Hochfahren auf das zugehörige Steuergerät geladen werden.

Mittels des zweiten Bediengeräts können im Verwaltungsgerät geänderte Betriebsparameterwerte in das erste Bediengerät übertragen und im ersten Bediengerät gespeichert werden. Auf diese Weise können die bei einer mittels des ersten Bediengeräts im Zuge einer Inbetriebnahme bzw. Wartung durchgeführten Betriebsparameterwerteänderungen im zugehörigen Projekt des Antriebssystems nachgeführt bzw. eingepflegt werden.

Die Betriebsparameter können folgendes umfassen (nicht abschließend): Feldbusparameter, beispielsweise in Form einer Buszykluszeit eines Feldbusses, mittels dem die Steuergeräte bzw. die Steuergeräte und das Verwaltungsgerät miteinander gekoppelt sind, Steuergeräteprofile, beispielsweise in Form einer gewünschten Steuergerätebetriebsart, Steuergerätefunktionsparameter, beispielsweise in Form eines Maximaldrehmoments, und/oder Elektromotordaten, beispielsweise in Form eines Wicklungswiderstands des oder der Elektromotoren.

Das elektrisches Antriebssystem umfasst mindestens ein Steuergerät mit einer Anzahl von Betriebsparametern, denen einstellbare Betriebsparameterwerte zugeordnet sind, wobei das Steuergerät in Abhängigkeit von den Betriebsparameterwerten arbeitet und Betriebsparameterwerkseinstellungswerte nichtflüchtig speichert, mindestens ein mit den Steuergerät gekoppeltes, übergeordnetes Verwaltungsgerät, das anwendungsspezifische Betriebsparameterwerte für das Steuergerät speichert, und mindestens ein mit dem Verwaltungsgerät gekoppeltes Bediengerät, wobei das Steuergerät, das Verwaltungsgerät und das Bediengerät dazu ausgebildet sind, das oben genannte Verfahren auszuführen.

Das elektrische Antriebssystem kann eine Anzahl von Elektromotoren umfassen, wobei einem jeweiligen Elektromotor mindestens ein Steuergerät in Form eines Frequenzumrichters oder eines Servoumrichters zugeordnet ist. Es besteht die Möglichkeit, dass einem einzelnen Steuergerät genau ein oder zwei oder mehr als zwei Elektromotoren zugeordnet sind, beispielsweise für den Fall von so genannten Zwei- oder Mehrachsanwendungen, bei dem ein einzelner Frequenzumrichter oder Servoumrichter zwei oder mehr als zwei Elektromotoren ansteuert.

Das elektrische Antriebssystem kann weiter eine Anzahl von Sensoren und Aktoren umfassen, wobei einem jeweiligen Sensor und/oder Aktor ein Steuergerät zugeordnet ist.

Die Erfindung wird nachfolgend unter Bezugnahme auf die Zeichnung beschrieben, die Ausführungsformen der Erfindung darstellt. Hierbei zeigt schematisch:

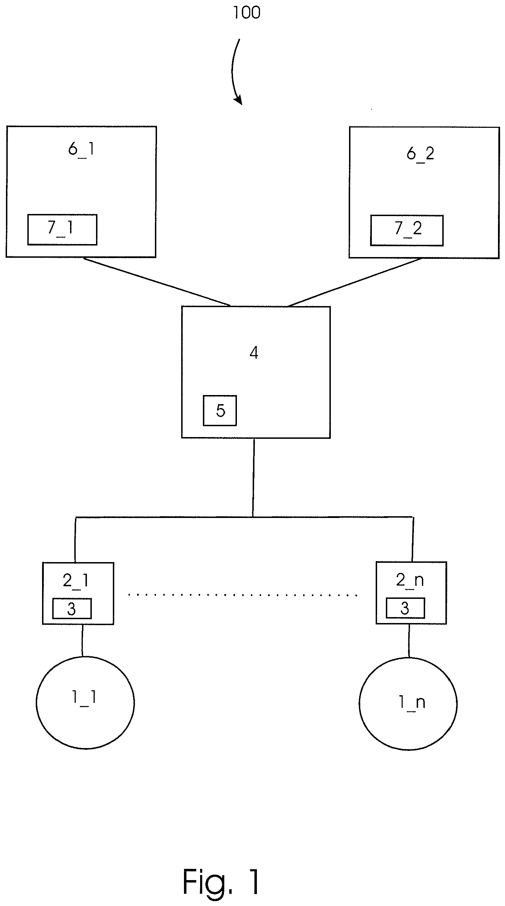

- Fig. 1: ein elektrisches Antriebssystem mit mehreren Steuergeräten in Form von Frequenzumrichtern mit einer erfindungsgemäßen Betriebsparameterwerteverwaltung der Frequenzumrichter.

Fig. 1 zeigt ein elektrisches Antriebssystem 100 mit mehreren, beispielsweise zwei oder drei, Steuergeräten in Form von parametrierbaren Frequenzumrichtern 2_1 bis 2_n, wobei die Steuergeräte 2_1 bis 2_n jeweils Betriebsparameterwerkseinstellungswerte in einem Speicher 3 nichtflüchtig speichern.

Weiter ist ein mit den Steuergeräten 2_1 bis 2_n über einen herkömmlichen Feldbus gekoppeltes, übergeordnetes Verwaltungsgerät 4 vorgesehen, das anwendungsspezifische Betriebsparameterwerte für die Steuergeräte 2_1 bis 2_n in einem nichtflüchtigen Speicher 5 speichert.

Das Antriebssystem 100 umfasst ferner ein erstes Bediengerät in Form eines Personal Computers (PC) 6_1 mit einer Service-Software zur Wartung bzw. zum Service des Antriebssystems 100 und ein zweites Bediengerät in Form eines herkömmlichen Personal Computers 6_2 mit einer Software zum Projektieren des elektrischen Antriebssystems 100. Die Bediengeräte 6_1 und 6_2 sind über eine geeignete Schnittstelle mit dem Verwaltungsgerät 4 koppelbar.

Bei einem Hochfahren des elektrischen Antriebssystems 100 wird automatisch wie folgt verfahren.

In den jeweiligen Steuergeräten 2_1 bis 2_n werden beim Booten die Betriebsparameterwerte auf die Betriebsparameterwerkseinstellungswerte eingestellt, indem beispielsweise entsprechende Software-Variablen, die den Betriebsparameterwerten entsprechen, mit den im Speicher 3 gespeicherten Betriebsparameterwerkseinstellungswerten initialisiert werden.

Anschließend werden mittels des Verwaltungsgeräts 4 die im Speicher 5 gespeicherten anwendungsspezifischen Betriebsparameterwerte in die jeweiligen Steuergeräte 2_1 bis 2_n geladen, wobei für jedes Steuergerät 2_1 bis 2_n spezifische Betriebsparameterwerte im Speicher 5 gespeichert sein können.

In der Regel ist im Speicher 5 ein vollständiger Satz von Betriebsparameterwerten für sämtliche Steuergeräte 2_1 bis 2_n gespeichert, wobei aus dem vollständigen Satz von Betriebsparameterwerten bevorzugt nur diejenigen Betriebsparameterwerte beim Hochfahren des Antriebssystems 100 auf ein zugehöriges Steuergerät geladen werden, die sich von den Betriebsparameterwerkseinstellungswerten unterscheiden. Alternativ kann der Satz von Betriebsparameterwerten beim Hochfahren des Antriebssystems 100 vollständig auf ein zugehöriges Steuergerät geladen werden.

Bei einer Inbetriebnahme werden mittels des Bediengeräts 6_2 zunächst die Betriebsparameterwerte in den Steuergeräten 2_1 bis 2_n wie gewünscht eingestellt bzw. verändert. Die derart eingestellten Betriebsparameterwerte weichen in der Regel von den entsprechenden Betriebsparameterwerkseinstellungswerten ab.

Wenn die Betriebsparameterwerte wie gewünscht eingestellt sind, wird mittels des Bediengeräts 6_2 das Verwaltungsgerät 4 derart angesteuert, dass dieses die in den Steuergeräten 2_1 bis 2_n aktuell eingestellten Betriebsparameterwerte ausliest und als die anwendungsspezifischen Betriebsparameterwerte im Speicher 5 speichert, sodass bei einem nächsten Hochfahren des Antriebssystems 100 die derart gespeicherten Betriebsparameterwerte wieder in die zugehörigen Steuergeräte 2_1 bis 2_n geschrieben werden.

Zusammenfassend wird bei einer Inbetriebnahme bzw. Wartung des Antriebssystems 100 wie folgt verfahren.

Die Steuergeräte, hier beispielweise in Form von Frequenzumrichtern 2_1 bis 2_n, werden mit ihrer jeweiligen Werkseinstellung gestartet bzw. gebootet.

Sämtliche Parameter bzw. Parameterwerte, die von der Werkseinstellung abweichen, werden über ein auf dem Verwaltungsgerät 4 gespeicherten Parameterdatensatz auf die Steuergeräte 2_1 bis 2_n geladen und ersetzen die Werkseinstellung.

Mittels des Personal Computers 6_2 mit der Software zum Projektieren des elektrischen Antriebssystems 100 kann offline (keine Datenverbindung zum Verwaltungsgerät 4) ein Anlagenprojekt erstellt werden, in dem bereits das Verwaltungsgerät 4 und die Steuergeräte 2_1 bis 2_n konfiguriert werden können.

Sobald eine Datenverbindung zwischen dem Personal Computer 6_2 und dem Verwaltungsgerät 4 besteht, kann das Projekt auf das Verwaltungsgerät heruntergeschrieben werden. Hierbei werden auch die Parameterwertesätze sämtlicher Steuergeräte 2_1 bis 2_n auf das Verwaltungsgerät 4 geschrieben.

Mit dem Personal Computer 6_2 können die Parameterwerte der Steuergeräte 2_1 bis 2_n online direkt auf den Frequenzumrichtern 2_1 bis 2_n geändert werden. Mittels eines Projektdownloads auf das Verwaltungsgerät 4 werden die Änderungen dann persistiert.

Im Servicefall kann der Service-PC 6_1 eingesetzt werden. Mit diesem kann ebenfalls online eine Parametrierung der Steuergeräte 2_1 bis2_n erfolgen. Der Service-PC 6_1 kann durch das Verwaltungsgerät 4 "tunneln" und Parameterwerte auf den Steuergeräten 2_1 bis 2_n online ändern, jedoch auf diese Weise nicht persistieren, d.h. dauerhaft im Antriebssystem 100 verfügbar machen.

Beispielsweise mittels eines Befehls "persistiere alle Parameterwerte der Steuergeräte" gerichtet an das Verwaltungsgerät 4, wird dieses aufgefordert, sich aktuelle Parameterwert(sätze) von den Steuergeräten 2_1 bis 2_n zu besorgen. Nachdem sämtliche Parameterwert(sätze) eingelesen sind, werden diese im Speicher 5 abgelegt und somit persistiert.

Mittels eines Parameterwertetransfers zwischen dem Service-PC 6_1 und dem Projektierungs-PC 6_2 können die geänderten Parametwerte nachträglich im Projekt angepasst werden und ein entsprechendes Archiv fließen.

## Patentansprüche

1. Verfahren zum Betreiben eines elektrischen Antriebssystems (100), wobei das elektrische Antriebssystem umfasst:
- mindestens ein Steuergerät (2_1 bis 2_n) mit einer Anzahl von Betriebsparametern, denen einstellbare Betriebsparameterwerte zugeordnet sind, wobei das Steuergerät in Abhängigkeit von den Betriebsparameterwerten arbeitet und Betriebsparameterwerkseinstellungswerte nichtflüchtig speichert,
- mindestens ein mit den Steuergerät gekoppeltes, übergeordnetes Verwaltungsgerät (4), das anwendungsspezifische Betriebsparameterwerte für das Steuergerät speichert, und
- mindestens ein mit dem Verwaltungsgerät gekoppeltes Bediengerät (6_1, 6_2),
- wobei bei einem Hochfahren des elektrischen Antriebssystems automatisiert folgende Schritte durchgeführt werden:
- Einstellen der Betriebsparameterwerte auf die Betriebsparameterwerkseinstellungswerte in dem Steuergerät und
- anschließend mittels des Verwaltungsgeräts Laden mindestens solcher anwendungsspezifischer Betriebsparameterwerte in das Steuergerät, die von den Betriebsparameterwerkseinstellungswerten abweichen, wobei im Steuergerät die entsprechenden Betriebsparameterwerte auf die geladenen anwendungsspezifischen Betriebsparameterwerte eingestellt werden,
- wobei zur, insbesondere persistenten, Einstellung von Betriebsparameterwerten folgende Schritte durchgeführt werden:
- mittels des Bediengeräts Verändern mindestens eines Betriebsparameterwertes in dem Steuergerät und
- mittels des Bediengeräts Ansteuern des Verwaltungsgeräts derart, dass dieses die in dem Steuergerät aktuell eingestellten Betriebsparameterwerte ausliest und als die anwendungsspezifischen Betriebsparameterwerte für das Steuergerät speichert.

2. Verfahren nach Anspruch 1, **dadurch gekennzeichnet, dass** mindestens zwei Bediengeräte vorgesehen sind, wobei mittels eines ersten Bediengeräts ein Projektieren des elektrischen Antriebssystems umfassend ein Festlegen der anwendungsspezifischen Betriebsparameterwerte durchgeführt wird und mittels eines zweiten Bediengeräts eine Wartung des elektrischen Antriebssystems umfassend eine Änderung von Betriebsparameterwerten durchgeführt wird.

3. Verfahren nach Anspruch 2, **dadurch gekennzeichnet, dass** mittels des zweiten Bediengeräts geänderte Betriebsparameterwerte in das erste Bediengerät übertragen und im ersten Bediengerät gespeichert werden.

4. Verfahren nach einem der vorhergehenden Ansprüche, **dadurch gekennzeichnet, dass** die Betriebsparameter folgendes umfassen:
- Feldbusparameter,
- Steuergeräteprofile,
- Steuergerätefunktionsparameter und/oder
- Elektromotordaten.

5. Elektrisches Antriebssystem (100), umfassend:
- mindestens ein Steuergerät (2_1 bis 2_n) mit einer Anzahl von Betriebsparametern, denen einstellbare Betriebsparameterwerte zugeordnet sind, wobei das Steuergerät in Abhängigkeit von den Betriebsparameterwerten arbeitet und Betriebsparameterwerkseinstellungswerte nichtflüchtig speichert, mindestens ein mit den Steuergerät gekoppeltes, übergeordnetes Verwaltungsgerät (4), das anwendungsspezifische Betriebsparameterwerte für das Steuergerät speichert, und
- mindestens ein mit dem Verwaltungsgerät gekoppeltes Bediengerät (6_1, 6_2),
- wobei das Steuergerät, das Verwaltungsgerät und das Bediengerät dazu ausgebildet sind, das Verfahren nach einem der Ansprüche 1 bis 4 auszuführen.

6. Elektrisches Antriebssystem nach Anspruch 5, **gekennzeichnet durch**,
- eine Anzahl von Elektromotoren (1_1 bis 1_n), wobei mindestens einem Elektromotor ein Steuergerät in Form eines Frequenzumrichters oder eines Servoumrichters zugeordnet ist.

7. Elektrisches Antriebssystem nach Anspruch 5 oder 6, **gekennzeichnet durch**,
- eine Anzahl von Sensoren und Aktoren, wobei einem jeweiligen Sensor und/oder Aktor ein Steuergerät zugeordnet ist.

## Claims

1. Method for operating an electric drive system (100), the electric drive system comprising:
- at least one control apparatus (2_1 to 2_n) comprising a number of operating parameters which have adjustable operating parameter values assigned thereto, wherein the control apparatus works as a function of the operating parameter values and stores operating parameter factory default values in a non-volatile manner,
- at least one superordinate management apparatus (4) coupled to the control apparatus, which management apparatus stores application-specific operating parameter values for the control apparatus, and
- at least one operator unit (6_1, 6_2) coupled to the management apparatus,
- wherein upon booting of the electric drive system, the following steps are carried out in an automated manner:
- adjusting the operating parameter values to the operating parameter factory default values in the control apparatus, and
- subsequently, by means of the management apparatus, loading at least such application-specific operating parameter values into the control apparatus that differ from the operating parameter factory default values, wherein in the control apparatus the corresponding operating parameter values are adjusted to the loaded application-specific operating parameter values,
- wherein for, in particular persistent, adjustment of operating parameter values, the following steps are carried out:
- by means of the operator unit, varying of at least one operating parameter value in the control apparatus, and
- by means of the operator unit, controlling the management apparatus such that the latter reads the operating parameter values currently set in the control apparatus and stores them as the application-specific operating parameter values for the control apparatus.

2. Method according to claim 1, **characterized in that** at least two operator units are provided, wherein projecting the electric drive system comprising setting the application-specific operating parameter values is carried out by means of a first operator unit, and maintenance of the electric drive system comprising variation of operating parameter values is carried out by means of a second operator unit.

3. Method according to claim 2, **characterized in that** by means of the second operator unit varied operating parameter values are transferred to the first operator unit and stored in the first operator unit.

4. Method according to any of the preceding claims, **characterized in that** the operating parameters comprise the following:
- fieldbus parameters,
- control apparatus profiles,
- control apparatus functional parameters, and/or
- electric motor data.

5. Electric drive system (100), comprising:
- at least one control apparatus (2_1 to 2_n) comprising a number of operating parameters which have adjustable operating parameter values assigned thereto, wherein the control apparatus works as a function of the operating parameter values and stores operating parameter factory default values in a non-volatile manner,
- at least one superordinate management apparatus (4) coupled to the control apparatus, which management apparatus stores application-specific operating parameter values for the control apparatus, and
- at least one operator unit (6_1, 6_2) coupled to the management apparatus,
- wherein the control apparatus, the management apparatus and the operator unit are configured to carry out the method according to any of claims 1 to 4.

6. Electric drive system according to claim 5, **characterized by**
- a number of electric motors (1_1 to 1_n), wherein at least one electric motor has a control apparatus in the form of a frequency converter or a servo converter assigned thereto.

7. Electric drive system according to claim 5 or 6, **characterized by**
- a number of sensors and actuators, wherein a respective sensor and/or actuator has a control apparatus assigned thereto.

## Revendications

1. Procédé de fonctionnement d'un système d'entraînement électrique (100), le système d'entraînement électrique comprenant :
- au moins un dispositif de commande (2_1 à 2_n) comprenant un certain nombre de paramètres de fonctionnement auxquels sont associées des valeurs de paramètres de fonctionnement réglables, le dispositif de commande fonctionnant en fonction des valeurs des paramètres de fonctionnement et mémorisant de manière non volatile des valeurs de réglage d'usine de paramètres de fonctionnement,
- au moins un dispositif de gestion de niveau supérieur (4) qui est couplé au dispositif de commande et qui mémorise des valeurs de paramètres de fonctionnement spécifiques à l'application et destinées au dispositif de commande et
- au moins un dispositif d'exploitation (6_1, 6_2) couplé au dispositif de gestion,
- les étapes suivantes étant réalisées automatiquement au démarrage du système d'entraînement électrique :
- régler les valeurs de paramètres de fonctionnement sur les valeurs de réglage d'usine de paramètres de fonctionnement dans le dispositif de commande, et
- puis utiliser le dispositif de gestion pour charger dans le dispositif de commande au moins les valeurs de paramètres de fonctionnement spécifiques à l'application qui s'écartent des valeurs de réglage d'usine de paramètres de fonctionnement, les valeurs de paramètres de fonctionnement correspondantes étant réglées dans le dispositif de commande sur les valeurs de paramètres de fonctionnement spécifiques à l'application qui ont été chargées,
- les étapes suivantes étant réalisées pour régler, en particulier de manière persistante, des valeurs de paramètres de fonctionnement :
- utiliser le dispositif d'exploitation pour modifier au moins une valeur de paramètre de fonctionnement dans le dispositif de commande et
- utiliser le dispositif d'exploitation pour commander le dispositif de gestion de manière à ce que celui-ci lise les valeurs de paramètres de fonctionnement actuellement réglées dans l'appareil de commande et les mémorise comme valeurs de paramètres de fonctionnement spécifiques à l'application destinées au dispositif de commande.

2. Procédé selon la revendication 1, **caractérisé en ce qu'**il est prévu au moins deux dispositifs d'exploitation, une projection du système d'entraînement électrique incluant une définition des valeurs de paramètres de fonctionnement spécifiques à l'application étant effectuée au moyen d'un premier dispositif d'exploitation, et un deuxième dispositif d'exploitation étant utilisé pour effectuer une maintenance du système d'entraînement électrique, y compris une modification des valeurs de paramètres de fonctionnement.

3. Procédé selon la revendication 2, **caractérisé en ce que** les valeurs de paramètres de fonctionnement modifiées sont transmises au premier dispositif d'exploitation au moyen du deuxième dispositif d'exploitation et sont mémorisées dans le premier dispositif d'exploitation.

4. Procédé selon l'une des revendications précédentes, **caractérisé en ce que** les paramètres de fonctionnement comprennent les éléments suivants :
- des paramètres de bus de terrain,
- des profils de dispositif de commande,
- des paramètres de fonctionnement de dispositif de commande et/ou
- des données de moteur électrique.

5. Système d'entraînement électrique (100) comprenant :
- au moins un dispositif de commande (2_1 à 2_n) comprenant un certain nombre de paramètres de fonctionnement auxquels sont associées des valeurs de paramètres de fonctionnement réglables, le dispositif de commande fonctionnant en fonction des valeurs de paramètres de fonctionnement et mémorisant de manière non volatile des valeurs de réglage d'usine de paramètres de fonctionnement,
- au moins un dispositif de gestion de niveau supérieur (4) qui est couplé au dispositif de commande et qui mémorise des valeurs de paramètres de fonctionnement spécifiques à l'application et destinées au dispositif de commande, et
- au moins un dispositif d'exploitation (6_1, 6_2) qui est couplé au dispositif de gestion,
- le dispositif de commande, le dispositif de gestion et le dispositif d'exploitation étant conçus pour mettre en œuvre le procédé selon l'une des revendications 1 à 4.

6. Système d'entraînement électrique selon la revendication 5, **caractérisé par**
- un certain nombre de moteurs électriques (1_1 à 1_n), un dispositif de commande se présentant sous la forme d'un convertisseur de fréquence ou d'un servo-convertisseur étant associé à au moins un moteur électrique.

7. Système d'entraînement électrique selon la revendication 5 ou 6, **caractérisé par**
- un certain nombre de capteurs et d'actionneurs, un dispositif de commande étant respectivement associé à un capteur et/ou à un actionneur.
